# EUROPÄISCHE PATENTSCHRIFT

(11) **EP 1 391 672 B1**
(45) Veröffentlichungstag und Bekanntmachung des Hinweises auf die Patenterteilung: **20.01.2010**
(21) Anmeldenummer: 03017331.4
(22) Anmeldetag: 31.07.2003
(51) Int. Cl.: F27D 21/00, G01N 33/20, F27B 14/20

(54) **Überwachungseinrichtung für Schmelzöfen**
Monitoring device for melting furnaces
Dispositif de surveillance pour des fours de fusion

(30) Priorität: 16.08.2002 DE 10237603
(43) Veröffentlichungstag der Anmeldung: 25.02.2004
(73) Patentinhaber: Wieland-Werke AG, 89070 Ulm (DE)
(72) Erfinder: Müller, Hilmar R. Dr., 89287 Bellenberg (DE); Thiess, Horst, 89231 Neu-Ulm (DE)

(56) Entgegenhaltungen:
- US-A- 4 367 866
- HOPF M: "UEBERWACHUNG DES FUTTERVERSCHLEISSES VON TIEGEL- UND RINNENOEFEN" GIESSEREI, GIESSEREI VERLAG. DUSSELDORF, DE, Bd. 89, Nr. 1, 15. Januar 2002 (2002-01-15), Seiten 36-42, XP001143282 ISSN: 0016-9765

## Beschreibung

Die Erfindung betrifft einen Schmelzofen mit Überwachungseinrichtung gemäß dem Oberbegriff des Anspruchs 1.

Bei Induktionsöfen kann ein Tiegelbruch schwere Anlageschäden verursachen und zudem Personen gefährden. Für die rechtzeitige Meldung von drohenden Durchbrüchen sind bereits unterschiedliche Systeme im Einsatz.

Üblicherweise wird im einfachsten Fall die Berührung von Schmelze mit der Spule durch Erdschluss angezeigt. Vor der Spule eingebaute Meldenetze, beispielsweise auf einer am Tiegel aufgebrachten elektrisch isolierenden Hinterfüllmasse, versprechen eine Meldung, bevor die austretende Schmelze die Spule kontaktiert. Die Schaltung und Ausführung der Meldenetze gibt es in unterschiedlichen Ausführungen. Einfache Systeme messen den Widerstand im Stromkreis Tiegel - Meldenetz - Messgerät. Dazu muss das Messgerät mittels eines Kontakts, meist eine in die Bodenstampfmasse eingelegte Edelstahlfahne, mit dem von der Spule umgebenen Tiegel verbunden werden. Bei einem Riss im Tiegel tritt eine Schmelzezunge aus, dringt durch die auf den Tiegel aufgebrachte Hinterfüllmasse hindurch und berührt das Meldenetz. Der vorher sehr große Widerstand der Hinterfüllmasse fällt durch den Kontakt praktisch auf den Wert Null. Die Auswerteeinheit zeigt dies optisch oder akustisch an und schaltet die Ofenleistung ab.

Nachteil dieser Schaltung ist, dass bei Verlust des Kontakts im Stromkreis keine Änderung der Anzeige erfolgt, beispielsweise infolge eines durch Schrumpfung des Tiegels verursachten Kabelbruchs oder durch Oxidation der Edelstahlfahne, die eine Erhöhung des Übergangswiderstands an der Fahne zur Folge hat. Damit wird die Überwachungseinrichtung wirkungslos, da die Widerstandsanzeige auch dann auf unendlich bleibt, wenn eine Schmelzezunge das Meldenetz berührt.

Ansätze, eine frühzeitigere Erkennung vor einem Tiegelbruch mit Schmelzeaustritt zu gewährleisten, sind aus der Veröffentlichung von Hopf, Gießerei 89 (2002), Nr. 1, pp. 36 - 42 bekannt. Dabei wird die Restwanddicke basierend auf der Temperaturabhängigkeit des spezifischen elektrischen Widerstandes von Feuerfestmaterial von der Temperatur gemessen und zur Auswertung des Verschleißes der lokalen Ofenwandstärke ausgenutzt. Hierzu werden Sensoren im Feuerfestaufbau installiert, die aus zwei drahtförmigen, kammartig ausgebildeten Elektroden in ein flexibles Glimmermaterial oder in Keramik eingebettet sind. Tritt nun an einer Stelle des Sensors eine erhöhte Temperatur auf, so verringert sich der spezifische elektrische Widerstand der Keramik an diesem Ort. Diese Widerstandsänderung zwischen den beiden Elektroden wird über ein Messgerät erfasst und ausgewertet.

Allerdings funktioniert dies insbesondere bei Öfen mit Elektro- oder Tongrafit-Tiegeln nur bedingt, da hier die ausgeprägte Temperaturabhängigkeit des Widerstands entfällt.

Des Weiteren ist aus der Druckschrift US 6,148,018 ein System zur Erkennung des Eindringens einer Metallschmelze in die Wandung eines Induktionsofens bekannt. Der Induktionsofen beinhaltet einen Tiegel mit einer Feuerfestauskleidung zur Aufnahme von geschmolzenem Metall. Auch umfasst der Ofen eine Stromversorgung für eine Induktionsspule und für das Erkennungssystem. Das Erkennungssystem besteht aus einer Anordnung von Elektroden, die zwischen den Induktionsspulen und der Feuerfestauskleidung anbracht sind. Diese Elektroden sind auf einer Trägermatte aufgebracht, die einen auf Temperatur empfindlichen Binder enthält.

Dieser Binder verändert bei Temperatureinwirkung durch eine chemische Umwandlung seinen elektrischen Widerstand und erzeugt an den Elektroden einen Leckagestrom, der vom Erkennungssystem detektiert und ausgewertet wird.

Zudem ist aus der Auslegeschrift DE 1 220 086 eine Vorrichtung zur Anzeige beginnender und zur Verhütung vollständiger Schmelztiegeldurchbrüche bei Induktionsöfen bekannt. Die Überwachungsvorrichtung besteht aus einer in die Isolierung zwischen der Tiegelaußenwand und der Induktionsspule eingebetteten Mantelelektrode, die über eine Spannungsquelle und einem Anzeigeinstrument mit dem Tiegelinneren in leitender Verbindung steht. Der Stromkreis der Überwachungseinrichtung ist allerdings so aufgebaut, dass eine schadhafte Leitung im Überwachungsbetrieb nicht erkannt werden kann.

Der Erfindung liegt die Aufgabe zugrunde, einen Schmelzofen mit Überwachungseinrichtung anzugeben, welcher mit größerer Zuverlässigkeit einen Schmelzeaustritt überwacht.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt die technische Lehre eine Überwachungseinrichtung von Schmelzöfen auf Schmelzeaustritt ein, bestehend aus einem geschlossenen Stromkreis aus mehreren Leiterabschnitten mit zumindest partiell leitender Oberfläche sowie einem Mess-/ Anzeigegerät, bei der ein erster Leiterabschnitt über einen ohmschen Widerstand R mit einem zweiten Leiterabschnitt in Reihe geschaltet ist und der erste Leiterabschnitt unmittelbar benachbart, jedoch elektrisch isoliert zum zweiten Leiterabschnitt beabstandet angeordnet ist.

Die Erfindung geht dabei von der Überlegung aus, dass die bei einem Tiegelbruch austretende Schmelze frühzeitig erkannt werden sollte. Insbesondere sollte bei Induktionsöfen die frühzeitige Erkennung dazu führen, dass die austretende Schmelzezunge die Spule nicht kontaktiert. Des weiteren sollte sich die Erfindung auch für einen Einsatz bei Elektro- oder Tongrafit-Tiegeln eignen, also bei Einrichtungen, die keine ausgeprägte Temperaturabhängigkeit des Widerstandes aufweisen. Zudem sollte die Erfindung im Betriebszustand Störungen bei der Überwachung erkennen.

Die Überwachungseinrichtung ist dazu aus einem ohmschen Widerstand R mit in Reihe geschalteten Leiterabschnitten aufgebaut. Der ohmsche Widerstand ist im Einsatz am Ofen an einer Stelle positioniert, an der er nicht unmittelbar hohen Temperaturen ausgesetzt ist. Der Temperatureinfluss darf den Widerstand weder beschädigen, noch den elektrischen Widerstandswert wesentlich verändern. Entlang der Überwachungszone am Schmelzofen verläuftder erste Leiterabschnitt unmittelbar benachbart zum zweiten Leiterabschnitt. Der Abstand der beiden Leiter ist möglichst gering, damit austretende Schmelze beide Leiterabschnitte durch Überbrücken des Widerstandes R unmittelbar kurzschließt. Hierzu sind die Oberflächen der Leiterabschnitte zumindest partiell elektrisch leitend. Andere Bereiche der Leiterabschnitte, beispielsweise Zuleitungen, können auch an der Oberfläche isoliert sein. Unter dem jeweiligen Leiterabschnitt wird damit allgemein der vor oder nach dem ohmschen Widerstand R verlaufende elektrische Leiter verstanden.

Für eine besondere Gestaltungsfreiheit bei der Anordnung sind Leiterabschnitte so konzipiert, dass der zu überwachende Bereich des Ofens gezielt punktuell, linienoder flächenförmig mit der Überwachungseinrichtung belegt ist. Dazu sind die Leiterabschnitte vorteilhafterweise kammartig ausgebildet. Alternativ oder zusätzlich sind die Leiterabschnitte mäanderförmig ausgebildet, die sich gegenseitig umschlingen.

Prinzipiell kann die Größe des ohmschen Widerstands R weitgehend frei gewählt werden. Zweckmäßigerweise ist der ohmsche Widerstand R um den Faktor 100 bis 1000 größer, als der Widerstand der in Reihe geschalteten Leiterabschnitte. Weitere Kriterien für die Wahl des Widerstandes ergeben sich beispielsweise aus der Verwendung von Hinterfüllmassen, auf denen die Leiterabschnitte am Ofen angeordnet werden. Auch die elektrischen Widerstände von Abstandshaltem und Fixierungen sind dabei zu beachten. Bei geringem Abstand der Leiterabschnitte voneinander müssen die Leiterabschnitte für einen zuverlässigen Betrieb der Überwachungseinrichtung noch ausreichend elektrisch isoliert vorliegen. In bevorzugter Ausführungsform beträgt der ohmsche Widerstand R = 0,5 bis 50 kOhm, insbesondere 1 bis 5 kOhm .

Zu einer zuverlässigen Überwachung eines Schmelzeaustritts gehört auch, dass Störungen der Überwachungseinrichtung erkannt und schnell behoben werden können. Im Betrieb eines Ofens muss eine Störung vom Personal mit einem Blick erkannt werden. Hierzu zeigt vorteilhafterweise das Mess-/Anzeigegerät im ungestörten Normalbetrieb im Wesentlichen die Größe des ohmschen Widerstandes R. Die Anzeige ist in Ordnung, wenn der definierte Widerstand von beispielsweise 2 kOhm angezeigt wird, d.h. es liegt kein Kabelbruch oder eine sonstige Störung vor. Im Wesentlichen bedeutet im Falle des ungestörten Normalbetriebs, dass aufgrund der Reihenschaltung außer R auch die Widerstandsanteile der jeweiligen Leiterabschnitte additiv hinzukommen, die jedoch aufgrund ihres geringen Betrags eine untergeordnete Rolle spielen. Bei einer Störung durch Leiterbruch zeigt das Mess/Anzeigegerät den Widerstand 'Unendlich' an. Durch diese Eigendiagnosefunktion wird die Überwachungseinrichtung mit Zuleitungen auf Funktion überprüft. Eine Störung im Stromkreis bedeutet noch keine unmittelbare Gefahr. Die Ursache der Störung kann gesucht und beseitigt werden. Bei Schmelzeaustritt berührt die Schmelzezunge beispielsweise zwei Zinken des Meldenetzkamms und schließt die Leiterabschnitte kurz, der Widerstand fällt auf 'Null'. Dies ist im automatisierten Zustand mit einer Abschaltung des Ofens verbunden. Da besondere Gefahr von einem unerwarteten Schmelzeaustritt ausgeht, bietet eine Automatisierung die größtmögliche Sicherheit, um Personal im Bereich des Ofens nicht weiter zu gefährden. Vorteilhafterweise sind die Widerstandsanzeigen 'Unendlich' bzw. 'Null' jeweils zusätzlich mit einer akustischen bzw. optischen Anzeige gekoppelt.

Manche Bereiche eines Schmelzofens sind hinsichtlich einer Überwachung von besonderem Interesse. Prinzipiell sind die Leiterabschnitte um das mit Schmelze gefüllte Gefäß geführt. In bevorzugter Ausführungsform sind die Leiterabschnitte vollflächig am Umfang des mit Schmelze gefüllten Gefäßes angeordnet. Gegebenenfalls werden manche Bereiche, beispielsweise der Halsbereich, Induktor oder Anflanschbereich eines Rinnenofens oder der Spulenbereich beim Induktionsofen, durch ein besonders dichtes Netz an Leiterabschnitten belegt.

Durch mehrwöchigen Betrieb unter Hitzeeinwirkung muss eine Überwachungseinrichtung dauerhaft am Ofen angebracht werden. Vorteilhafterweise geschieht dies auf der dem mit Schmelze gefüllten Gefäß abgewandten Oberfläche einer Hinterfüllmasse aus Feuerfestmaterial. Diese muss in der Größe des elektrischen Widerstands entsprechend zum ohmschen Widerstand R angepaßt sein. In einer bevorzugten Ausführungsform besteht die Hinterfüllmasse aus keramischem Material, wodurch der elektrische Widerstand der Hinterfüllmasse ein Vielfaches des ohmschen Widerstandes R beträgt. Dieser Wert gewährleistet einen sicheren Betrieb der Überwachungseinrichtung. In einer altemativen Ausführungsform bildet das mit Schmelze gefüllte Gefäß einen Teil eines Leiterabschnitts. Besonders eignen sich hierzu elektrisch leitende Elektro- oder Tongrafit-Tiegel.

Bei größeren Ofeneinheiten erreichen die jeweiligen Leiterabschnitte eine größere Länge, wodurch deren elektrischer Widerstand auf ein beträchtliches Maß ansteigt. In derartigen Fällen ist es vorteilhaft, mehrere Überwachungseinrichtungen um das mit Schmelze gefüllte Gefäß anzuordnen. Jede einzelne Überwachungseinrichtung kann auch unterschiedliche Aufgaben übernehmen, so dass bei Schmelzeaustritt beispielsweise in Verbindung mit einer besonderen Gefährdung von Personen der Ofen unmittelbar abgeschaltet wird, bei einem Austritt ohne unmittelbare Gefahr an anderer Stelle die Ofenleistung kontinuierlich herunter geregelt wird.

Die mit der Erfindung erzielten Vorteile bestehen insbesondere darin, dass durch einen Kabelbruch eine Änderung der Anzeige erfolgt und damit eine zuverlässige und kontinuierliche Überwachung der Funktion der Überwachungseinrichtung gewährleistet ist. Insbesondere werden dadurch die durch einen Tiegelbruch verursachten Anlageschäden minimiert und Personen geschützt. Über bereits bestehende Systeme hinaus funktioniert die Überwachungseinrichtung insbesondere bei Öfen mit Elektrooder Tongrafit-Tiegeln, da hier die in anderen Systemen benötigte ausgeprägte Temperaturabhängigkeit des Widerstands entbehrlich ist. Zudem werden zusätzliche Einrichtungen, wie beispielsweise störanfällige Kontaktfahnen, nicht mehr benötigt. Es. lassen sich Schmelzöfen ständig und zuverlässig auf einen durch Tiegelbruch verursachten Schmelzeaustritt überwachen und die Anlagensicherheit erhöhen.

Die Erfindung wird anhand einer Zeichnung näher erläutert. Darin zeigt:

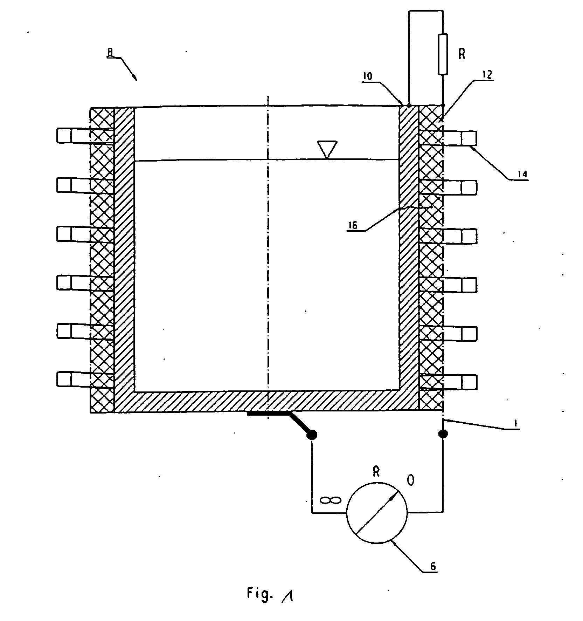

- Fig. 1: einen Schmelzofen mit Überwachungseinrichtung,

Im Ausführungsbeispiel nach Fig. 1 ist ein Schmelzofen 8, ausgebildet als Induktionsofen, mit Überwachungseinrichtung dargestellt. Das mit Schmelze gefüllte Gefäß 10 (Tiegel) ist mit einer Hinterfüllmasse umschlossen. Auf der Hinterfüllmasse 12 ist um den gesamten Umfang des Tiegels 10 ein kammförmiger erster Leiterabschnitt 2 angebracht. Der zweite Leiterabschnitt 4 verläuft ausgehend vom elektrischen Widerstand R durch das Tiegelmaterial 10 über den Bodenkontakt zum Mess/Anzeigegerät. Der Stromkreis wird durch den in Reihe geschalteten ohmschen Widerstand R, dem Tiegel 10 mit Bodenkontakt und dem Mess-/Anzeigegerät 6 geschlossen. Der Widerstand R ist so bemessen, dass er deutlich kleiner als der Widerstand der Hinterfüllmassse 12 aber auch deutlich größer als der Widerstand der in Reihe geschalteten Leiterabschnitte 2, 4 ist. Zweckmäßigerweise liegt er zwischen 1 und 5 kOhm, ein bevorzugter Wert ist 2 kOhm. Zum Schutz der Spule 14 liegt die Überwachungseinrichtung 1 radial innerhalb der Spulenwindungen, wodurch eine über den Riss 16 austretende Schmelzezunge zuerst die Leiterabschnitte kurzschließt und daraufhin die Ofenleistung abgeschaltet wird.

Weitere alternative Ausführungsformen, insbesondere eine größere Anzahl von Überwachungseinrichtungen, sind möglich. Diese richten sich nach der Tiegelgröße und -geometrie. Beispielsweise ist es vorteilhaft, bei Tiegeln mit ebener Bodenfläche eine weitere Überwachungseinrichtung am Boden anzubringen. Die in der Figur 1 dargestellte Überwachungseinrichtung kann außer der beschriebenen flächigen Kamm- oder Mäanderform auch parallele oder punktuelle Leiterabschnitte aufweisen, mit denen gezielt Anschlussstutzen oder Bohrungen in Tiegeln überwacht werden können.

### Bezugszeichenliste

- 1: Überwachungseinrichtung
- 2: erster Leiterabschnitt
- 4: zweiter Leiterabschnitt
- 6: Mess-/Anzeigegerät
- 8: Schmelzofen
- 10: schmelzegefülltes Gefäß (Tiegel)
- 12: Hinterfüllmasse
- 14: Spule
- 16: Riss
- R: Ohmscher Widerstand
- S: Anzeigeschaltung

## Patentansprüche

1. Schmelzofen mit Überwachungseinrichtung (1) auf Schmelzeaustritt, bestehend aus einem geschlossenen Stromkreis aus mehreren Leiterabschnitten (2, 4) mit zumindest partiell leitender Oberfläche sowie einem Mess-/Anzeigegerät (6),
**dadurch gekennzeichnet,**
- **dass** ein erster kammförmiger Leiterabschnitt (2) über einen ohmschen Widerstand R mit einem zweiten Leiterabschnitt (4) in Reihe geschaltet ist,
- **dass** der erste Leiterabschnitt (2) unmittelbar benachbart, jedoch elektrisch isoliert zum zweiten Leiterabschnitt (4) beabstandet auf der einem Tiegel (10) abgewandten Oberfläche einer Hinterfüllmasse (12) um den Tiegel (10) angeordnet ist und,
- **dass** der zweite Leiterabschnitt (4), ausgehend vom elektrischen Widerstand R, durch das Tiegelmaterial des Tiegels (10) über den Bodenkontakt zum Mess-/ Anzeigegerät verläuft, wobei der ohmsche Widerstand im Einsatz am Ofen an einer Stelle positioniert ist, an der er nicht unmittelbar hohen Temperaturen ausgesetzt wird.

2. Schmelzofen mit Überwachungseinrichtung nach Anspruch 1, **dadurch gekennzeichnet, dass** der ohmsche Widerstand R um den Faktor 100 bis 1000 größer ist, als der Widerstand der in Reihe geschalteten Leiterabschnitte (2, 4).

3. Schmelzofen mit Überwachungseinrichtung nach Anspruch 1 oder 2, **dadurch gekennzeichnet, dass** der ohmsche Widerstand R = 0,5 bis 50 kOhm beträgt.

4. Schmelzofen mit Überwachungseinrichtung nach Anspruch 3, **dadurch gekennzeichnet, dass** der ohmsche Widerstand R = 1 bis 5 kOhm beträgt.

5. Schmelzofen mit Überwachungseinrichtung nach einem der Ansprüche 1 bis 4, **dadurch gekennzeichnet, dass** das Mess-/Anzeigegerät (6) im ungestörten Normalbetrieb im Wesentlichen die Größe des ohmschen Widerstandes R, bei Störung durch Leiterbruch den Widerstand 'Unendlich' und bei Schmelzeaustritt den Widerstand 'Null' (Kurzschluss) anzeigt.

6. Schmelzofen mit Überwachungseinrichtung nach Anspruch 5, **dadurch gekennzeichnet, dass** die Widerstandsanzeigen 'Unendlich' bzw. 'Null' jeweils mit einer akustischen bzw. optischen Anzeige gekoppelt sind.

7. Schmelzofen mit Überwachungseinrichtung nach Anspruch 5 oder 6, **dadurch gekennzeichnet, dass** die Widerstandsanzeige 'Null' mit einer Abschaltung des Ofens (8) gekoppelt ist.

8. Schmelzofen mit Überwachungseinrichtung nach einem der Ansprüche 1 bis 7, **dadurch gekennzeichnet, dass** die Hinterfüllmasse (12) aus keramischem Material besteht.

## Claims

1. Smelting furnace having a device (1) for monitoring runout of melt, comprising a closed circuit of a plurality of conductive sections (2, 4) of at least partially conducting surface, and a measuring/displaying device (6),
**characterised in that**
- a first comb-like conductor section (2) is connected in series to a second conductor section (4) via an ohmic resistor R,
- the first conductor section (2) is arranged around a crucible (10), directly adjacent to but spaced in an electrically insulated manner from the second conductor section (4) and on the surface of a backfill mass (12), which surface faces away from the crucible (10), and
- the second conductor section (4) follows a course, starting from the electrical resistor R, through the crucible material of the crucible (10) via the floor contact to the measuring/displaying device, the ohmic resistor being positioned, when in use on the furnace, in a location in which it is not directly exposed to high temperatures.

2. Smelting furnace with monitoring device according to claim 1, **characterised in that** the ohmic resistor R is larger by a factor of 100 to 1000 than the resistance of the series-connected conductor sections (2, 4).

3. Smelting furnace with monitoring device according to either claim 1 or claim 2, **characterised in that** the ohmic resistance R=0.5 to 50 kOhm.

4. Smelting furnace with monitoring device according to claim 3. **characterised in that** the ohmic resistance R=1 to 5 kOhm.

5. Smelting furnace with monitoring device according to any one of claims 1 to 4, **characterised in that** the measuring/displaying device (6) indicates substantially the magnitude of the ohmic resistor R in undisturbed normal operation, the resistance value "infinity" during malfunction due to a conductor break, and the resistance value "zero" (short circuit) during runout of melt.

6. Smelting furnace with monitoring device according to claim 5, **characterised in that** the resistance displays of "infinity" or "zero" are each coupled to an acoustic or optical display.

7. Smelting furnace with monitoring device according to either claim 5 or claim 6, **characterised in that** the resistance display "zero" is coupled to a furnace cutoff switch (8).

8. Smelting furnace with monitoring device according to any one of claims 1 to 7, **characterised in that** the backfill mass (12) consists of ceramic material.

## Revendications

1. Four de fusion avec dispositif de surveillance (1) quant à une sortie ou à une fuite de bain de fusion, constitué par un circuit de courant fermé, qui est formé de plusieurs tronçons de conducteur (2, 4) présentant une surface au moins partiellement conductrice, ainsi que par un appareil de mesure/de visualisation (6), **caractérisé**
- **en ce qu'**un premier tronçon de conducteur (2) en forme de peigne est monté en série avec un deuxième tronçon de conducteur (4) par l'intermédiaire d'une résistance ohmique R,
- **en ce que** le premier tronçon de conducteur (2) est agencé au voisinage direct, toutefois de manière électriquement isolée et à distance du deuxième tronçon de conducteur (4), au niveau de la surface éloignée d'un creuset (10) d'une masse de doublage (12), autour du creuset (10), et
- **en ce que** le deuxième tronçon de conducteur (4) s'étend à partir de la résistance électrique R, à travers le matériau de creuset du creuset (10), en passant par le contact de fond, jusqu'à l'appareil de mesure/de visualisation, la résistance ohmique étant positionnée, en service, au niveau du four, en un endroit où elle n'est pas directement exposée à des températures élevées.

2. Four de fusion avec dispositif de surveillance selon la revendication 1, **caractérisé en ce que** la résistance ohmique R est plus grande, d'un facteur 100 à 1000, que la résistance des tronçons de conducteur (2, 4) montés en série.

3. Four de fusion avec dispositif de surveillance selon la revendication 1 ou la revendication 2, **caractérisé en ce que** la résistance ohmique R est d'une valeur R = 0, 5 à 50 kOhm.

4. Four de fusion avec dispositif de surveillance selon la revendication 3, **caractérisé en ce que** la résistance ohmique R est d'une valeur R = 1 à 5 kOhm.

5. Four de fusion avec dispositif de surveillance selon l'une des revendications 1 à 4, **caractérisé en ce que** l'appareil de mesure/de visualisation (6) indique ou affiche sensiblement la grandeur de la résistance ohmique R dans le cas d'un fonctionnement normal sans incident, une résistance «infinie» dans le cas d'un incident par rupture de conducteur, et la résistance «nulle» (court-circuit) en cas de fuite ou de sortie de bain de fusion.

6. Four de fusion avec dispositif de surveillance selon la revendication 5, **caractérisé en ce que** les indications de résistance «infinie» ou respectivement «nulle» sont couplées avec une signalisation acoustique ou optique.

7. Four de fusion avec dispositif de surveillance selon la revendication 5 ou la revendication 6, **caractérisé en ce que** l'indication de résistance «nulle» est couplée avec une mise à l'arrêt du four (8).

8. Four de fusion avec dispositif de surveillance selon l'une des revendications 1 à 7, **caractérisé en ce que** la masse de doublage (12) est constituée d'un matériau céramique.
